# EUROPEAN PATENT SPECIFICATION

(11) **EP 3 664 111 B1**
(45) Date of publication and mention of the grant of the patent: **07.06.2023**
(21) Application number: 18209872.3
(22) Date of filing: 03.12.2018
(51) Int. Cl.: H01G 4/32, H01G 4/012, H01G 4/015, H01G 4/18, H01G 4/38

(54) **FILM CAPACITOR WITH BALANCING PATH**
FOLIENKONDENSATOR MIT AUSGLEICHSPFAD
CONDENSATEUR À FILM À CHEMIN D'ÉQUILIBRAGE

(43) Date of publication of application: 10.06.2020
(73) Proprietor: Hitachi Energy Switzerland AG, 5400 Baden (CH)
(72) Inventor: Baur, Matthias, 5400 Baden (CH); Donzel, Lise, 5430 Wettingen (CH); Christen, Thomas, 5413 Birmenstorf (CH); Laihonen, Sari, 724 82 Västerås (SE)
(74) Representative: Michalski Hüttermann & Partner Patentanwälte mbB

(56) References cited:
- EP-A1- 1 341 195
- WO-A1-00/14754
- CN-Y- 201 435 307
- US-A- 3 508 128
- US-A1- 2013 250 473

## Description

### Field of the disclosure

The present disclosure relates to film capacitors with internal series connections.

### Technical background

Film capacitors with an internal series connection of capacitors have at least one electrically floating electrode. It is beneficial if the electric potential of the electrically floating electrode lies in the middle between the potentials of the two neighboring electrodes.

CN 201 435 307 Y describes a polypropylene film capacitor, whereby, by adopting an aluminum foil as a lead-out electrode, the polypropylene film capacitor has extremely strong current enduring capability. However, even in the case of a symmetric design, the potential of the floating electrode may drift to a value different from the average value of the neighboring electrodes. A drift of the potential of the electrically floating electrode can lead to an asymmetric internal field distribution. Faster aging, higher losses, and potentially dangerous thermal runaway may occur. In general, a reliability problem may result.

It is therefore an object of the present disclosure to overcome at least some of the above-mentioned problems in the prior art at least partially.

### Summary of the disclosure

In view of the above, a film capacitor with a balancing path, particularly acting as resistive voltage divider, is provided. The invention is defined by the features of the independent claim. Preferred embodiments are defined by the features of the dependent claims.

According to an aspect of the present disclosure, a film capacitor is provided, the film capacitor including a first film, a second film, a first electrode connected to a first terminal, a second electrode connected to a second terminal, a floating electrode, and a balancing path.

A part of the electrically floating electrode is in contact with a front side of the first film. The balancing path provides a first balancing connection between the electrically floating electrode and the first terminal and a second balancing connection between the electrically floating electrode and the second terminal.

The first balancing connection and the second balancing connection each have an electrical resistance lower than any leakage resistance and higher than 10³ Ohm. A leakage resistance is an electrical resistance through any of the first film and the second film between the electrically floating electrode and an electrode devoid of contact with the front side of the first film

Further advantages, features, aspects and details that can be combined with embodiments described herein are evident from the dependent claims, claim combinations, the description and the drawings.

### Brief description of the Figures:

The details will be described in the following with reference to the figures, wherein
Fig. 1 is a schematic representation of a film capacitor according to an embodiment of the disclosure;
Fig. 2 is a schematic cross-sectional view of a film capacitor according to an embodiment of the disclosure;
Fig. 3 is a schematic representation of a winding bobbin of a film capacitor according to an embodiment of the disclosure, the representation including a part of the first film and a part of the second film;
Fig. 4 is a schematic representation of a film capacitor according to an embodiment of the disclosure;
Fig. 5 is a schematic representation of a film capacitor according to an embodiment of the disclosure;
Fig. 6 is another schematic representation of the film capacitor shown in Fig. 5;
Fig. 7 is a schematic cross-sectional view of a film capacitor according to an embodiment of the disclosure; and
Fig. 8 is a schematic cross-sectional view of a film capacitor according to an embodiment of the disclosure.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

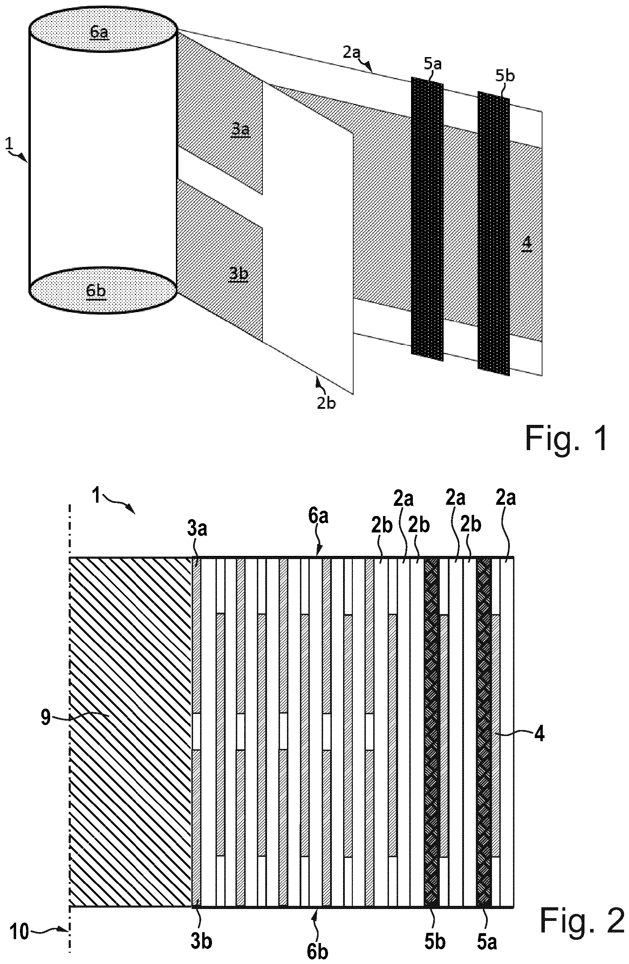

Fig. 1 is a schematic representation of a film capacitor according to an embodiment of the disclosure. The film capacitor 1 includes a first film 2a, a second film 2b, a first electrode 3a and a second electrode 3b.

The film capacitor 1 is shown in a partially unrolled state. In an assembled state, the first film and the second film may be completely laid on top of each other. The first film and the second film may be wound around an axis to form a cylindrically shaped film capacitor. The first film and the second film may each be a dielectric film, particularly a plastic film.

The second film 2b may have a first edge region and a second edge region extending along a length direction of the second film 2b. The first electrode 3a may be in contact with a front side of the second film 2b, particularly in the first edge region. The second electrode 3b may be in contact with a front side of the second film 2b, particularly in the second edge region. The second film 2b may have a central margin which may also be called a center margin.

In the context of the present application, a central margin is particularly to be understood as a part of the first or second film located between first and second edge regions of respectively the first film 2a or the second film 2b and extending along a length direction of the first film 2a or the second film 2b, the front side of the central margin being devoid of contact with any of the first electrode 3a and the second electrode 3b. In embodiments, the central margin may be located between the first electrode 3a and the second electrode 3b and may particularly extend along a length direction of the second film 2b.

The film capacitor 1 may have a first contact layer 6a in contact with the first edge region of the second film 2b. The first contact layer 6a is particularly in contact with the first electrode 3a. The contact layer 6a may be in contact with a first terminal. The first terminal is not shown. The first electrode 3a may be connected to the first terminal, particularly via the first contact layer 6a. Herein, "connected" typically means "electrically connected".

In the context of the present disclosure, a terminal may be understood as an end region of a conductor of an electrical component. In particular, a terminal provides a connection point for another electrical component or generally a connection point for an electrical network, particularly an electrical circuit.

The film capacitor 1 may have a second contact layer 6b in contact with the second edge region of the second film 2b. The second contact layer 6b is particularly in contact with the second electrode 3b. The second contact layer 6b may be in contact with a second terminal. The second terminal is not shown. The second electrode 3b may be connected to the second terminal, particularly via the second contact layer 6b.

The film capacitor 1 further includes an electrically floating electrode 4. The electrically floating electrode 4 may be in contact with a front side of the first film 2a. Generally, at least a part of the electrically floating electrode may be in contact with a front side of the first film. In embodiments, the whole electrically floating electrode may be in contact with a front side of the first film.

In the context of the present disclosure, an electrode may be understood as being electrically floating if it has no strongly conductive connection to a terminal, but instead is surrounded only by a dielectric or weakly conductive material or electrical connection (so that the floating electrode has a resistance higher than 10³ Ohm with respect to any terminal).

According to an aspect of the present disclosure, the first film 2a may have an edge margin, wherein a front side of the edge margin is devoid of contact with the electrically floating electrode 4. The first film 2a may have two borders extending along a length direction of the film. An edge margin particularly includes a part of the first film 2a adjoining one of the two borders. The first film 2a may have a first edge margin and a second edge margin, both extending along a length direction of the second film 2a. The front side of both the first and the second edge margin of the first film 2a may each be devoid of contact with the electrically floating electrode 4. The electrically floating electrode 4 is particularly devoid of contact with any of the first contact layer 6a, the first electrode, the second contact layer 6b, and the second electrode.

According to an aspect of the present disclosure, any electrode of the film capacitor may be an electrically conductive layer deposited on any of the first film and the second film. The electrically conductive layer may be a metallization, particularly a pure aluminum, pure zinc or a zinc aluminum alloy metallization. Particularly in this regard, "being devoid of contact with an electrode" may be understood as "not having a metallization". In embodiments, any electrode of the film capacitor may be an electrically conductive foil, particularly a metal foil, positioned between the first film and the second film.

The film capacitor 1 further includes a balancing path providing a first balancing connection between the electrically floating electrode 4 and the first terminal. The balancing path may further provide a second balancing connection between the electrically floating electrode 4 and the second terminal.

The first balancing connection and the second balancing connection may each be a weakly conductive electrical connection. The first balancing connection and the second balancing connection each have an electrical resistance lower than any leakage resistance. In particular, the first balancing connection and the second balancing connection each have an electrical resistance at least 25%, 50% or 75% lower than any leakage resistance. In embodiments, the first balancing connection and the second balancing connection each may have an electrical resistance lower than 10¹⁰ ohm, 10⁹ ohm or 10⁸ ohm.

The first balancing connection and the second balancing connection may each have an electrical resistance such that a power loss associated with the balancing path is lower than for example 20 W, 10 W or 5 W. In particular, the first balancing connection and the second balancing connection may each have an electrical resistance higher than 10 ohm, 10² ohm or 10⁵ ohm. Conduction losses may be mitigated. Potentially harmful hot spots, particularly reaching temperatures close to or above the melting temperature of the film or other physically, chemically or mechanically harmful temperatures for insulation properties, on elements providing the balancing path may be avoided.

Any of the first balancing connection and the second balancing connection may comprise a plurality of different electrical conductors connected electrically. Particularly, any of the first balancing connection and the second balancing connection may be partly provided by at least one further electrically floating electrode.

A leakage resistance may be understood as an electrical resistance through any of the first film 2a and the second film 2b between the electrically floating electrode 4 and an electrode devoid of contact with the front side of the first film 2a.In the context of the present application, an electrically floating electrode may be understood as an electrode devoid of connections to any voltage source besides weakly conductive connections provided by a balancing path. In particular, an electrically floating electrode may be an electrode where the only electrical connection between the electrode and any of the first terminal and the second terminal is a weakly conductive connection provided by a balancing path.

The balancing path may ensure that the electric potential of the electrically floating electrode has a value in the middle between the respective electric potentials of the first electrode and the second electrode. In absence of the balancing path, the electric potential of the electrically floating electrode may drift to other values.

The drift of the electric potential may be due to unipolar space charge injection of positive charge carriers from the first electrode or the second electrode into the first film or the second film. The unipolar space charge injection may charge the electrically floating electrode up to a higher potential. The shifted electric potential of the electrically floating electrode may lead to a change of the electric field in a region between the electrically floating electrode and the first electrode and in a region between the electrically floating electrode and the second electrode.

The electric potential of the electrically floating electrode having a value in the middle between the respective electric potentials of the first electrode and the second electrode may have the advantage that an asymmetric distribution of self-healing partial breakdown locations can be avoided. Aging of the film capacitor may be slowed down. A film capacitor having a higher lifetime may be provided. An increase of losses may be avoided. Potentially dangerous thermal runaway may be prevented. A fire risk may be mitigated. The reliability and the quality of the film capacitor may be increased.

The balancing path may be at least partly provided by a weakly conductive strip 5a, 5b, particularly by at least one weakly conductive strip 5a, 5b. The weakly conductive strip 5a, 5b may be connected, particularly electrically connected, to the electrically floating electrode 4, the first terminal and the second terminal. In particular, the weakly conductive strip is in contact with the electrically floating electrode 4 and any of: the first contact layer, the first terminal, the second contact layer and the second terminal.

The weakly conductive strips 5a, 5b may be arranged on a front surface of the first film. In particular, the weakly conductive strip 5a, 5b is arranged partly on a front surface of the first film 2a and partly on a surface of the electrically floating electrode 4.

In the example shown in Fig. 1, each of the weakly conductive strips 5a, 5b is a contiguous strip extending from a first edge margin to a second edge margin of the first film 2a. In embodiments, at least one of the weakly conductive strips may extend from the electrically floating electrode to only one of the first edge margin or the second edge margin of the first film 2a.

In general, the weakly conductive strip may be arranged partly on the front surface of the first film and partly on a surface of at least one electrode. The electrode is particularly in contact with the front side of the first film. A weakly conductive strip may be understood as for example a strip, band or tape comprising an electrically weakly conductive material.

The resistivity of the weakly conductive strip may have a specific value determined so as to achieve a balancing connection having a predetermined electrical resistance. In particular, the electrical resistance of a balancing connection provided by the weakly conductive strip is lower than any leakage resistance.

The weakly conductive strip may have a sheet resistance higher than for example 10⁴ ohms per square, 10⁶ ohms per square or 10⁸ ohms per square. The weakly conductive strip may have a sheet resistance lower than for example 10¹¹ ohms per square, 10¹⁰ ohms per square or 10⁸ ohms per square. In embodiments, the weakly conductive strip may be a static dissipative or antistatic plastic film. The weakly conductive strip may for example be a NORFILM^{™} static dissipative plastic film.

The electrically floating electrode 4 may have an electrically shielded portion. The shielded portion may be shielded from the first electrode 3a and the second electrode 3b by at least one shielding portion. The shielding portion may be another portion of the electrically floating electrode 4. Additionally or alternatively, the shielding portion may include at least a part of any other electrode on a similar potential as the electrically floating electrode.

The shielding portion may be lying between the shielded portion and any of the first electrode 3a and the second electrode 3b. In a direction parallel to a surface normal of the first film 2a, the shielded portion may be devoid of neighboring electrodes other than the shielding portion.

The film capacitor may have a low-field region. In the context of the present disclosure, a low-field region may be understood as a region including a shielded portion of an electrically floating electrode. The low-field region may further include a part of a margin of a first film, wherein the part of the margin adjoins the shielded portion of the electrically floating electrode. The electric field may be low, in particular close to zero, in the low-field region, even when a potential difference is applied between the first electrode and the second electrode.

At least a part of the balancing path may be provided in the low-field region. In embodiments, the weakly conductive strip 5a, 5b may be located only in the low-field region. Providing the balancing path in the low-field region may have the advantage that electric strength issues due to inhomogeneity can be avoided. Dielectric losses may be avoided. Inhomogeneity may arise for example due to an uneven thickness of elements providing the balancing path or due to air enclosures around elements providing the balancing path.

The second film may have an active section and a passive section. In the context of the present disclosure, an active section of a film may be understood as a section of the film along a main direction of extension where a front side of the film is in contact with any of the first electrode and the second electrode.

In the context of a present disclosure, a main direction of extension of a film is particularly to be understood as a length direction of the film. The length direction is in particular to be defined with regard to an unrolled and particularly an unfolded and more particularly a flat state of the film. In an assembled state, particularly a wound state, the main direction of extension of the film may be curved, particularly spirally curved.

In the context of the present disclosure, a passive section of a film may be understood as a section of the film along a main direction of extension where a front side of the film is devoid of contact with the first electrode and the second electrode.

At least a part of the balancing path may be provided directly adjacent to a back side of the passive section of the second film 2b. In embodiments, at least a part of an outer turn of the winding of the second film 2b may be a passive section of the second film 2b. A film capacitor with a low-field region as described within the present disclosure may be realized.

In the example shown in Fig. 1, the weakly conductive strips 5a, 5b are provided directly adjacent to a back side of a passive section of the second film 2b. The conductive strips 5a, 5b are particularly positioned on a surface of an outer turn of the first film 2a.

Fig. 2 is a schematic cross-sectional view of a film capacitor according to an embodiment of the disclosure. The film capacitor may have a winding bobbin 9. In this cross-sectional view, only one half of the film capacitor is shown. The film capacitor 1 may have the form of a cylinder with the cylinder axis 10. The first film 2a and the second film 2b may be wound around a winding bobbin 9.

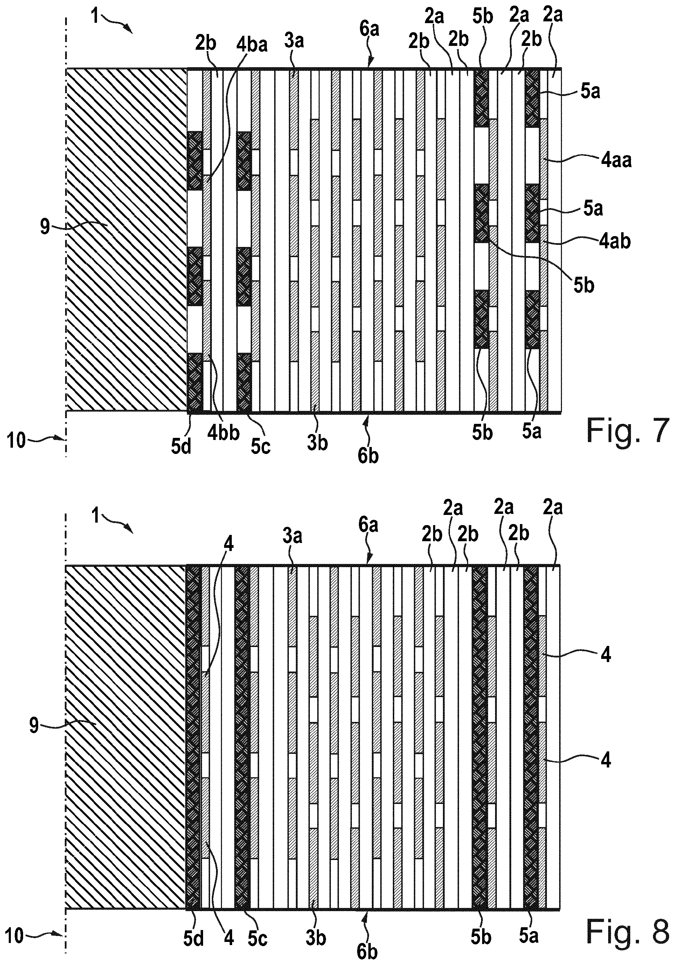

In Fig. 1 and in Fig. 2 a film capacitor 1 with an internal series connection equivalent to a series connection of two capacitors is shown. A film capacitor with a balancing path as described herein may be analogously also realized in film capacitors having an internal series connection equivalent to for example 3, 4, 5 or more capacitors. As an example, a film capacitor having an internal series connection equivalent to a series connection of five capacitors is shown in Fig. 7 and in Fig. 8.

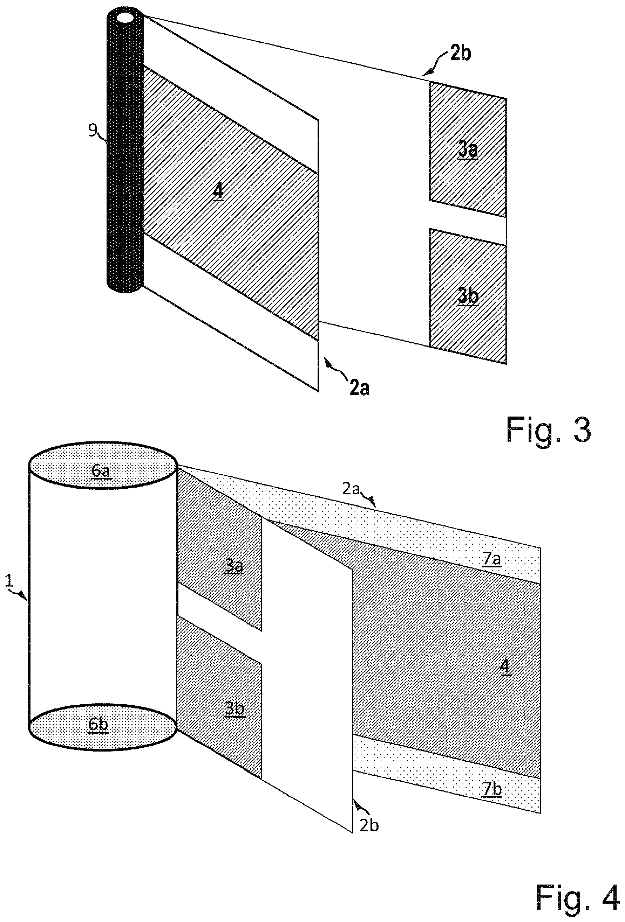

Fig. 3 is a schematic representation of a winding bobbin of a film capacitor according to an embodiment of the disclosure, the representation including a part of the first film and a part of the second film. At least a part of the winding bobbin 9 may include a weakly conductive material. The balancing path may be at least partly provided by the weakly conductive material of the winding bobbin 9.

The weakly conductive material of the winding bobbin may be a part of the bulk of the winding bobbin. In embodiments, the weakly conductive material of the winding bobbin may be positioned on a surface of a main part of the winding bobbin.

The first film 2a may be wound around the winding bobbin 9. An electrically floating electrode 4 in contact with a front side of the first film 2a may be in contact with the winding bobbin 9, particularly with the weakly conductive material of the winding bobbin 9.

A front side of a second film 2b may be in contact with a back side of the first film 2a. At least the first turn of the winding of the second film 2b around the winding bobbin 9 may be a passive section of the second film 2b. The balancing path may be provided by the winding bobbin at least partly in a low-field region of the film capacitor 1.

Fig. 4 is a schematic representation of a film capacitor according to an embodiment of the disclosure. At least a part of the surface of the first film 2a may be a weakly conductive surface 7a, 7b. The balancing path may be provided at least partly by the weakly conductive surface 7a, 7b.

The weakly conductive surface 7a, 7b may be provided on a modified part of the first film 2a. A modified part of the first film may be understood as a part of the first film treated so as to decrease a surface resistivity. The decrease in surface resistivity may be for example a decrease by a factor of 10⁴, 10⁵ or 10⁶. In embodiments, a modified part of the first film may be understood as a part of the first film coated with a weakly conductive material. The balancing path may be provided at least partly in a weakly conductive layer covering at least a part of the first film.

The modified part of the first film may have a sheet resistance lower than for example 10¹⁶ ohms per square, 10¹⁴ ohms per square or 10¹² ohms per square. The modified part of the first film may have a sheet resistance higher than for example 10⁴ ohms per square, 10⁷ ohms per square or 10¹⁰ ohms per square.

Treating the film so as to decrease the surface resistivity may comprise fluorination of the film. Fluorination of the film is in particular to be understood as treating the film with fluorine gas. Fluorination may increase the surface conductivity of insulating material. Typically, the process of fluorination is not reversible and the achieved surface properties remain stable.

As an example, the film may be a biaxially oriented polypropylene film with a sheet resistance of 2·10¹⁹ ohms per square. A fluorinated part of the film may have a sheet resistance of 2·10¹⁴ ohms per square.

The modified part of the first film may include only parts of the first film where the front side of the first film is devoid of contact with the electrically floating electrode in an assembled state of the film capacitor. In embodiments, the modified part of the first film may additionally include a contact part where the front side of the first film is in contact with the electrically floating electrode in an assembled state of the film capacitor. The contact part may have an area smaller than for example 30%, 15%, 5% or 3% of an area of the electrically floating electrode. In particular, an electrical contact between the modified part of the first film and the electrically floating electrode is provided. In the example shown in Fig. 4, the modified part of the first film 2a includes edge margins of the first film, wherein a front side of the edge margins is devoid of contact with the electrically floating electrode 4. In embodiments, the whole first film may be treated in order to decrease the surface resistivity.

According to an aspect of the present disclosure, only a section along a main direction of extension of the first film may include a modified part. A length of the section may have a specific value determined so as to achieve a balancing connection having a predetermined electrical resistance.

A front side of the modified part of the first film may be directly adjacent to a passive section of the second film. The weakly conductive surface may be located at least partly in a low-field region of the film capacitor. In particular, the weakly conductive surface may be located only in a low-field region of the film capacitor. In embodiments, the first film may be covered with a weakly conductive layer only in the low-field region of the film capacitor.

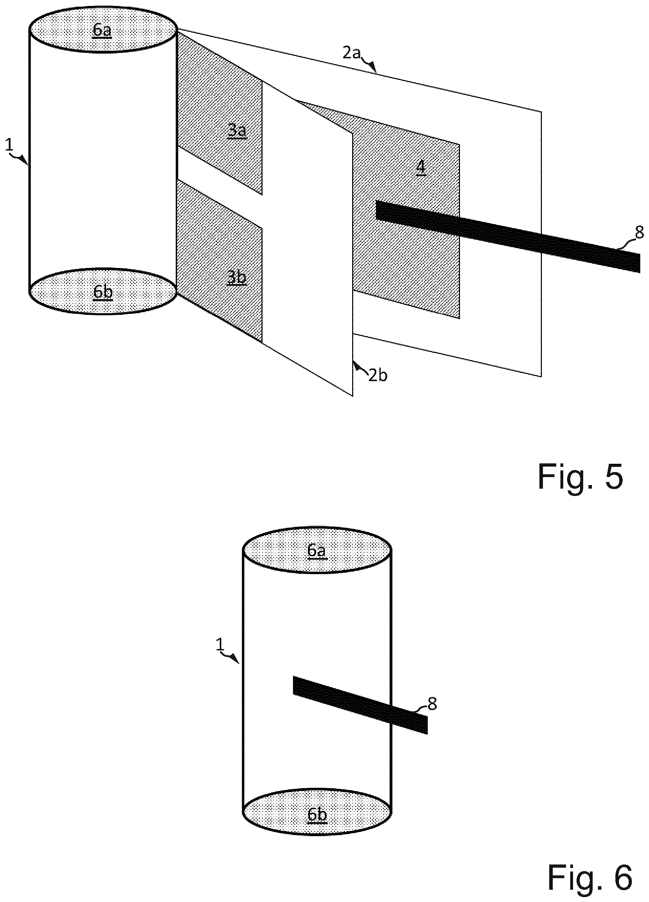

Fig. 5 is a schematic representation of a film capacitor according to an embodiment of the disclosure. The film capacitor 1 is shown in a partially unrolled state. The film capacitor 1 may include a third terminal 8 connected to the electrically floating electrode 4. The third terminal 8 may be in contact with a part of the electrically floating electrode 4, the part being directly adjacent to a passive section of the second film 2b. In particular, the third terminal 8 is in contact with the electrically floating electrode 4 in a low-field region of the film capacitor 1.

A balancing path may be provided at least partly by an external weakly conductive unit connected to the third terminal 8. The external weakly conductive unit is not shown. In particular, the external weakly conductive unit is positioned outside the film capacitor 1. The third terminal may be for example a metallic strip or a metallic band.

The external weakly conductive unit may be further electrically connected to the first electrode 3a, particularly via the first terminal, or to the second electrode 3b, particularly via the second terminal. In embodiments, a first balancing connection is provided via a first external conductive unit electrically connected to the third terminal 8 and the first electrode 3a. A second balancing connection may be provided via a second external conductive unit electrically connected to the third terminal 8 and the first electrode 3a.

The electrical resistance of an external weakly conductive unit may have a specific value determined so as to achieve a balancing connection having a predetermined electrical resistance. According to an aspect of the present disclosure, the external weakly conductive unit may be a resistor, particularly a balancing resistor.

Fig. 6 is another schematic representation of the film capacitor shown in Fig. 5. The film capacitor 1 with the third terminal 8 is shown in an assembled state.

Fig. 7 is a schematic cross-sectional view of a film capacitor according to an embodiment of the disclosure. In this cross-sectional view, only one half of the film capacitor is shown. The film capacitor 1 has an internal series connection equivalent to a series connection of five capacitors.

A front side of the first film 2a may be in contact with two electrically floating electrodes 4aa, 4ab and with a second electrode 3b. The second electrode 3b may be in contact with a second terminal, particularly via a second contact layer 6b. A front side of the second film 2b may be in contact with two further electrically floating electrodes 4ba, 4bb and with a first electrode 3a. The first electrode 3a may be in contact with a first terminal, particularly via a first contact layer 6a. The first terminal and the second terminal are not shown.

The electrically floating electrodes 4aa, 4ab, 4ba, 4bb may be connected to the first terminal and to the second terminal via a balancing path. The balancing path may be provided by three first weakly conductive strips 5a, three second weakly conductive strips 5b, three third weakly conductive strips 5c and three fourth weakly conductive strips 5d.

For example, an electrically floating electrode 4aa may be connected to the first contact layer 6a via a first weakly conductive strip 5a and via a second weakly conductive strip 5b. The electrically floating electrode 4aa may be connected to a further electrically floating electrode 4ab via another first weakly conductive strip 5a and via another second weakly conductive strip 5b. The further electrically floating electrode 4ab may be connected to the second electrode 3b via yet another first weakly conductive strip 5a and via yet another second weakly conductive strip 5b.

The electrically floating electrodes 4ba, 4bb in contact with a front side of the second film 2b may be analogously connected to the first contact layer 6a and the second contact layer 6b via the third weakly conductive strips 5c and via the fourth weakly conductive strips 5d.

The value of the electrical resistance may be individually different for each of the first weakly conductive strips 5a. Analogously, the value of the electrical resistance may be individually different for each of the second weakly conductive strips 5b, for each of the third weakly conductive strips 5c and for each of the fourth weakly conductive strips 5d.

The electrical resistances of the first weakly conductive strips 5a and of the second weakly conductive strips 5b may be chosen so that the respective electrical potential for each of the electrically floating electrodes 4aa, 4ab in contact with a front side of the first film 2a lies in the middle between the electric potentials of the respective two adjacent electrodes in contact with a front side of the second film 2b.

Analogously, the electrical resistances of the third weakly conductive strips 5c and of the fourth weakly conductive strips 5d may be chosen so that the respective electrical potential for each of the electrically floating electrodes 4ba, 4bb in contact with a front side of the second film 2b lies in the middle between the electric potentials of the respective two adjacent electrodes in contact with a front side of the first film 2a.

The first weakly conductive strips 5a and the second weakly conductive strips 5b may be provided directly adjacent to a back side of a passive section of the second film 2b. The third weakly conductive strips 5c and the fourth weakly conductive strips 5d may be provided directly adjacent to a back side of a passive section of the first film 2a. The first, second, third and fourth weakly conductive strips 5a, 5b, 5c, 5d may be provided in a low-field region of the film capacitor 1.

Fig. 8 is a schematic cross-sectional view of a film capacitor according to an embodiment of the disclosure. The film capacitor 1 has substantially the same structure as the embodiment shown in Fig. 7. The three first weakly conductive strips from Fig. 7 are replaced with one contiguous first weakly conductive strip 5a. Analogously, the second, the third and the fourth weakly conductive strips from Fig. 7 are replaced with respectively one contiguous second weakly conductive strip 5b, one contiguous third weakly conductive strip 5c and one contiguous fourth weakly conductive strip 5d.

Each of the weakly conductive strips 5a, 5b, 5c, 5d may have a varying electrical resistivity along a length direction. In embodiments, the variation of the electrical resistivity along the length direction may be due to a variation of any of a thickness and a width of the weakly conductive strips 5a, 5b, 5c and 5d along a length direction.

The electrical resistivity and the variation of the electrical resistivity of the first weakly conductive strip 5a and of the second weakly conductive strip 5b may be chosen such that the respective electrical potential for each of the electrically floating electrodes 4aa, 4ab in contact with a front side of the first film 2a lies in the middle between the electric potentials of the respective two adjacent electrodes in contact with a front side of the second film 2b.

Analogously, the electrical resistivity and the variation of the electrical resistivity of the third weakly conductive strip 5c and of the fourth weakly conductive strip 5d may be chosen such that the respective electrical potential for each of the electrically floating electrodes 4ba, 4bb in contact with a front side of the second film 2b lies in the middle between the electric potentials of the respective two adjacent electrodes in contact with a front side of the first film 2a.

## Claims

1. A film capacitor (1) comprising a first film (2a), a second film (2b), a first electrode (3a) connected to a first terminal, a second electrode (3b) connected to a second terminal, an electrically floating electrode (4), and a balancing path, wherein
the first film (2a) and the second film (2b) are dielectric,
a part of the electrically floating electrode (4) is in contact with a front side of the first film (2a),
the balancing path provides a first balancing connection between the electrically floating electrode (4) and the first terminal and a second balancing connection between the electrically floating electrode (4) and the second terminal,
the first balancing connection and the second balancing connection each have an electrical resistance lower than any leakage resistance and higher than 10³ Ohm, and
a leakage resistance is an electrical resistance through any of the first film (2a) and the second film (2b) between the electrically floating electrode (4) and an electrode devoid of contact with the front side of the first film (2a).

2. The film capacitor (1) according to claim 1, wherein
the balancing path is at least partly provided by a weakly conductive strip (5a),
the weakly conductive strip (5a, 5b) is in contact with the electrically floating electrode (4) and any of the first terminal and the second terminal, and
the electrical conductivity of the weakly conductive strip (5a, 5b) is such that an electrical resistance between the electrically floating electrode (4) and any terminal in contact with the weakly conductive strip (5a, 5b) is higher than 10³ Ohm.

3. The film capacitor (1) according to claim 2, wherein the weakly conductive strip (5a, 5b) is arranged on a surface of the first film (2a).

4. The film capacitor (1) according to any of the preceding claims, wherein
the electrically floating electrode (4) has a shielded portion,
the shielded portion is electrically shielded from the first electrode (3a) and the second electrode (3b) by a shielding portion of an electrode,
the film capacitor (1) has a low-field region comprising the shielded portion and
at least a part of the balancing path is provided in the low-field region.

5. The film capacitor (1) according to claim 4, wherein
the first film (2a) has an edge margin, a front side of the edge margin being devoid of contact with the electrically floating electrode (4), and
the low-field region further comprises a part of the edge margin which adjoins the shielded portion.

6. The film capacitor (1) according to any of claims 4 to 5, wherein the weakly conductive strip (5a, 5b) is located only in the low-field region.

7. The film capacitor (1) according to any of the preceding claims, wherein the second film (2b) has a passive section along a main direction of extension, a front side of the passive section is not in contact with any parts of the first electrode (3a) or the second electrode (3b), and at least a part of the balancing path is provided directly adjacent to a back side of the passive section.

8. The film capacitor (1) according to any of the preceding claims, further comprising a winding bobbin (9), wherein at least a part of the winding bobbin (9) comprises a weakly conductive material and the balancing path is provided at least partly by the weakly conductive material of the winding bobbin (9).

9. The film capacitor (1) according to any of the preceding claims, wherein at least a part of the surface of the first film (2a) is a weakly conductive surface and the balancing path is provided at least partly by the weakly conductive surface.

10. The film capacitor (1) according to claim 8, wherein the weakly conductive surface is provided on a part of the first film (2a) modified so as to decrease a surface resistivity of the first film (2a).

11. The film capacitor (1) according to any of claims 8 to 9, wherein the weakly conductive surface is provided on a fluorinated part of the first film (2a).

12. The film capacitor (1) according to any of claims 4 to 11, wherein the weakly conductive surface is located only in the low-field region.

13. The film capacitor (1) according to any of the preceding claims, wherein
the balancing path is provided at least partly by a weakly conductive layer which covers at least a part of the first film (2a).

14. The film capacitor (1) according to claim 13, wherein the weakly conductive layer covers the first film (2a) only in the low-field region of the first film (2a).

15. The film capacitor (1) according to any of the preceding claims, further comprising a third terminal (8) connected to the electrically floating electrode (4), wherein the balancing path is provided at least partly by an external weakly conductive unit connected to the third terminal (8).

## Patentansprüche

1. Folienkondensator (1), umfassend eine erste Folie (2a), eine zweite Folie (2b), eine erste Elektrode (3a), die mit einem ersten Anschluss verbunden ist, eine zweite Elektrode (3b), die mit einem zweiten Anschluss verbunden ist, eine elektrisch schwebende Elektrode (4), und einen Ausgleichspfad, wobei
die erste Folie (2a) und die zweite Folie (2b) dielektrisch sind,
ein Teil der elektrisch schwebenden Elektrode (4) in Kontakt mit einer Vorderseite der ersten Folie (2a) ist, der Ausgleichspfad eine erste Ausgleichsverbindung zwischen der elektrisch schwebenden Elektrode (4) und dem ersten Anschluss und eine zweite Ausgleichsverbindung zwischen der elektrisch schwebenden Elektrode (4) und dem zweiten Anschluss bereitstellt,
die erste Ausgleichsverbindung und die zweite Ausgleichsverbindung jeweils einen elektrischen Widerstand aufweisen, der kleiner als ein etwaiger Ableitwiderstand und größer als 10³ Ohm ist, und
ein Ableitwiderstand ein elektrischer Widerstand durch die erste Folie (2a) oder die zweite Folie (2b) zwischen der elektrisch schwebenden Elektrode (4) und einer Elektrode ist, die keinen Kontakt mit der Vorderseite der ersten Folie (2a) hat.

2. Folienkondensator (1) nach Anspruch 1, wobei
der Ausgleichspfad zumindest teilweise durch einen schwach leitenden Streifen (5a) bereitgestellt wird, der schwach leitende Streifen (5a, 5b) in Kontakt mit der elektrisch schwebenden Elektrode (4) und dem ersten Anschluss und/oder dem zweiten Anschluss ist, und
die elektrische Leitfähigkeit des schwach leitenden Streifens (5a, 5b) so ist, dass ein elektrischer Widerstand zwischen der elektrisch schwebenden Elektrode (4) und einem beliebigen, mit dem schwach leitenden Streifen (5a, 5b) in Kontakt stehenden Anschluss höher als 10³ Ohm ist.

3. Folienkondensator (1) nach Anspruch 2, wobei der schwach leitende Streifen (5a, 5b) auf einer Oberfläche der ersten Folie (2a) angeordnet ist.

4. Folienkondensator (1) nach einem der vorhergehenden Ansprüche, wobei
die elektrisch schwebende Elektrode (4) einen abgeschirmten Abschnitt aufweist,
der abgeschirmte Abschnitt durch einen Abschirmungsabschnitt einer Elektrode elektrisch von der ersten Elektrode (3a) und der zweiten Elektrode (3b) abgeschirmt ist,
der Folienkondensator (1) einen Niederfeldbereich aufweist, der den abgeschirmten Teil umfasst und zumindest ein Teil des Ausgleichspfades im Niederfeldbereich bereitgestellt wird.

5. Folienkondensator (1) nach Anspruch 4, wobei
der erste Film (2a) einen Flankenrand aufweist, wobei eine Vorderseite des Flankenrandes keinen Kontakt mit der elektrisch schwebenden Elektrode (4) hat, und
der Niederfeldbereich ferner einen Teil des Flankenrandes umfasst, der an den abgeschirmten Abschnitt angrenzt.

6. Folienkondensator (1) nach einem der Ansprüche 4 bis 5, wobei sich der schwach leitende Streifen (5a, 5b) nur im Niederfeldbereich befindet.

7. Folienkondensator (1) nach einem der vorhergehenden Ansprüche, wobei die zweite Folie (2b) einen passiven Abschnitt entlang einer Haupterstreckungsrichtung aufweist, eine Vorderseite des passiven Abschnitts nicht in Kontakt mit Teilen der ersten Elektrode (3a) oder der zweiten Elektrode (3b) steht und zumindest ein Teil des Ausgleichspfades direkt benachbart zu einer Rückseite des passiven Abschnitts bereitgestellt ist.

8. Folienkondensator (1) nach einem der vorhergehenden Ansprüche, ferner umfassend eine Wickelspule (9), wobei zumindest ein Teil der Wickelspule (9) ein schwach leitendes Material umfasst und der Ausgleichspfad zumindest teilweise durch das schwach leitende Material der Wickelspule (9) bereitgestellt wird.

9. Folienkondensator (1) nach einem der vorhergehenden Ansprüche, wobei zumindest ein Teil der Oberfläche der ersten Folie (2a) eine schwach leitende Oberfläche ist und der Ausgleichspfad zumindest teilweise durch die schwach leitende Oberfläche bereitgestellt wird.

10. Folienkondensator (1) nach Anspruch 8, wobei die schwach leitende Oberfläche auf einem Teil der ersten Folie (2a) bereitgestellt wird, der derart modifiziert ist, dass ein Oberflächenwiderstand der ersten Folie (2a) verringert wird.

11. Folienkondensator (1) nach einem der Ansprüche 8 bis 9, wobei die schwach leitende Oberfläche auf einem fluorierten Teil der ersten Folie (2a) bereitgestellt ist.

12. Folienkondensator (1) nach einem der Ansprüche 4 bis 11, wobei sich die schwach leitende Oberfläche nur im Niederfeldbereich befindet.

13. Folienkondensator (1) nach einem der vorhergehenden Ansprüche, wobei
der Ausgleichspfad zumindest teilweise durch eine schwach leitende Schicht bereitgestellt wird, die zumindest einen Teil der ersten Folie (2a) bedeckt.

14. Folienkondensator (1) nach Anspruch 13, wobei die schwach leitende Schicht die erste Folie (2a) nur im Niederfeldbereich der ersten Folie (2a) bedeckt.

15. Folienkondensator (1) nach einem der vorhergehenden Ansprüche, ferner umfassend einen dritten Anschluss (8), der mit der elektrisch schwebenden Elektrode (4) verbunden ist, wobei der Ausgleichspfad zumindest teilweise durch eine externe, schwach leitende Einheit bereitgestellt wird, die mit dem dritten Anschluss (8) verbunden ist.

## Revendications

1. Condensateur à film (1) comprenant un premier film (2a), un deuxième film (2b), une première électrode (3a) connectée à une première borne, une deuxième électrode (3b) connectée à une deuxième borne, une électrode électriquement flottante (4), et un trajet d'équilibrage, dans lequel
le premier film (2a) et le deuxième film (2b) sont diélectriques,
une partie de l'électrode électriquement flottante (4) est en contact avec un côté avant du premier film (2a), le trajet d'équilibrage fournit une première connexion d'équilibrage entre l'électrode électriquement flottante (4) et la première borne et une deuxième connexion d'équilibrage entre l'électrode électriquement flottante (4) et la deuxième borne,
la première connexion d'équilibrage et la deuxième connexion d'équilibrage présentent chacune une résistance électrique inférieure à toute résistance de fuite et supérieure à 10³ Ohm, et
une résistance de fuite est une résistance électrique à travers l'un quelconque du premier film (2a) et du deuxième film (2b) entre l'électrode électriquement flottante (4) et une électrode dépourvue de contact avec la face avant du premier film (2a).

2. Condensateur à film (1) selon la revendication 1, dans lequel
le trajet d'équilibrage est au moins en partie fourni par une bande faiblement conductrice (5a),
la bande faiblement conductrice (5a, 5b) est en contact avec l'électrode électriquement flottante (4) et l'une quelconque : de la première borne et de la deuxième borne, et
la conductivité électrique de la bande faiblement conductrice (5a, 5b) est telle qu'une résistance électrique entre l'électrode électriquement flottante (4) et toute borne en contact avec la bande faiblement conductrice (5a, 5b) soit supérieure à 10³ Ohm.

3. Condensateur à film (1) selon la revendication 2, dans lequel la bande faiblement conductrice (5a, 5b) est agencée sur une surface du premier film (2a).

4. Condensateur à film (1) selon l'une quelconque des revendications précédentes, dans lequel
l'électrode électriquement flottante (4) présente une partie blindée,
la partie blindée est protégée électriquement de la première électrode (3a) et de la deuxième électrode (3b) par une partie de blindage d'une électrode,
le condensateur à film (1) présente une région de faible champ comprenant la partie blindée et
au moins une partie du trajet d'équilibrage est fournie dans la région de faible champ.

5. Condensateur à film (1) selon la revendication 4, dans lequel
le premier film (2a) présente une marge de bordure, un côté avant de la marge de bordure étant dépourvu de contact avec l'électrode électriquement flottante (4), et
la région de faible champ comprend en outre une partie de la marge de bordure qui est adjacente à la partie blindée.

6. Condensateur à film (1) selon l'une quelconque des revendications 4 à 5, dans lequel la bande faiblement conductrice (5a, 5b) est située uniquement dans la région de faible champ.

7. Condensateur à film (1) selon l'une quelconque des revendications précédentes, dans lequel le deuxième film (2b) présente une section passive le long d'une direction d'extension principale, un côté avant de la section passive n'est pas en contact avec de quelconques parties de la première électrode (3a) ou de la deuxième électrode (3b), et au moins une partie du trajet d'équilibrage est fournie directement adjacente à un côté arrière de la section passive.

8. Condensateur à film (1) selon l'une quelconque des revendications précédentes, comprenant en outre une bobine d'enroulement (9), dans lequel au moins une partie de la bobine d'enroulement (9) comprend un matériau faiblement conducteur et le trajet d'équilibrage est fourni au moins en partie par le matériau faiblement conducteur de la bobine d'enroulement (9).

9. Condensateur à film (1) selon l'une quelconque des revendications précédentes, dans lequel au moins une partie de la surface du premier film (2a) est une surface faiblement conductrice et le trajet d'équilibrage est fourni au moins en partie par la surface faiblement conductrice.

10. Condensateur à film (1) selon la revendication 8, dans lequel la surface faiblement conductrice est fournie sur une partie du premier film (2a) modifiée de manière à réduire une résistivité de surface du premier film (2a).

11. Condensateur à film (1) selon l'une quelconque des revendications 8 à 9, dans lequel la surface faiblement conductrice est fournie sur une partie fluorée du premier film (2a).

12. Condensateur à film (1) selon l'une quelconque des revendications 4 à 11, dans lequel la surface faiblement conductrice est située uniquement dans la région de faible champ.

13. Condensateur à film (1) selon l'une quelconque des revendications précédentes, dans lequel
le trajet d'équilibrage est fourni au moins en partie par une couche faiblement conductrice qui recouvre au moins une partie du premier film (2a).

14. Condensateur à film (1) selon la revendication 13, dans lequel la couche faiblement conductrice recouvre le premier film (2a) uniquement dans la région de faible champ du premier film (2a).

15. Condensateur à film (1) selon l'une quelconque des revendications précédentes, comprenant outre une troisième borne (8) connectée à l'électrode électriquement flottante (4), dans lequel le trajet d'équilibrage est fourni au moins en partie par une unité externe faiblement conductrice connectée à la troisième borne (8).
